# EUROPÄISCHE PATENTSCHRIFT

(11) **EP 3 746 269 B1**
(45) Veröffentlichungstag und Bekanntmachung des Hinweises auf die Patenterteilung: **17.04.2024**
(21) Anmeldenummer: 19700769.3
(22) Anmeldetag: 08.01.2019
(51) Int. Cl.: B25C 1/18, F16B 19/02

(54) **FEDERARMHÜLSE**
SPRING ARM SLEEVE
MANCHON DE BRAS À RESSORT

(30) Priorität: 13.02.2018 DE 102018103124
(43) Veröffentlichungstag der Anmeldung: 09.12.2020
(73) Patentinhaber: Böllhoff Verbindungstechnik GmbH, 33649 Bielefeld (DE)
(72) Erfinder: ZIEBART, Jan Robert, 33824 Werther (DE); HAESLER, Bernd, 33790 Halle (DE)
(74) Vertreter: HWP Intellectual Property
(86) Internationale Anmeldenummer: PCT/EP2019/050268
(87) Internationale Veröffentlichungsnummer: WO 2019/158274

(56) Entgegenhaltungen:
- EP-A1- 0 038 396
- EP-A2- 2 187 480
- WO-A1-99/08007
- WO-A1-2009/097121
- DE-A1-102012 024 762
- DE-U1- 9 114 434
- DE-U1-202016 106 666
- FR-A1- 2 967 795
- US-A- 5 088 942
- US-B1- 7 985 042

## Beschreibung

### 1. Gebiet der Erfindung

Vorliegende Erfindung betrifft eine Federarmhülse, mit der ein Fügeelement einer Fügevorrichtung positionierbar ist, eine Fügevorrichtung in Kombination mit einer derartigen Federarmhülse sowie ein Verfahren zur Herstellung derartiger Federarmhülsen.

### 2. Hintergrund der Erfindung

Fügeelemente zur Herstellung von Verbindungen zwischen mindestens zwei Bauteilen finden breite Anwendung im Stand der Technik. Zu diesen Fügeelementen zählen beispielsweise Stanzniete, Setzbolzen, Schrauben, Nägel und dergleichen. Mit derartigen Fügeelementen werden Bauteile unterschiedlichster Materialien, wie beispielsweise Metall, Kunststoff oder Kombinationen davon, verbunden. Entsprechend weisen diese Bauteile unterschiedliche Dicken auf, sodass auch die Längen und Geometrien der jeweils verwendeten Fügeelemente variieren.

Um ein Fügeelement in mindestens ein Bauteil setzen zu können, muss dieses Fügeelement in Fügerichtung vor einem Stempel der Fügevorrichtung positioniert werden. Sobald sich der Stempel in Fügerichtung bewegt, wird diese Bewegung auf das Fügeelement übertragen, und dieses in das mindestens eine Bauteil gesetzt. Zu diesem Zweck ist es erforderlich, das Fügeelement verlässlich in Fügerichtung vor dem Stempel zu positionieren, sodass die Stempelfläche an einem Kopf des Fügeelements angreifen und dieses in das mindestens eine Bauelement eintreiben kann.

Da die unterschiedlichen Fügeelemente aufgrund der verschiedenen Anwendungsfälle in ihrer Geometrie, wie beispielsweise in der Länge und im Durchmesser sowie in der Kopfform und Kopfdimension variieren, müssen geometrische Voraussetzungen getroffen werden, um das Fügeelement passend orientiert in Fügerichtung vor dem Stempel anordnen zu können. Zu diesem Zweck sind im Stand der Technik stegartig ausgebildete Bremsleisten bekannt. Diese erstrecken sich in Fügerichtung im Mundstück oder Fügekanal der Fügevorrichtung und werden radial einwärts, beispielsweise durch O-Ringe, federvorgespannt. Da diese Bremsstege in Fügerichtung den Fügekanal bzw. das Mundstück verjüngen, wird das zugeführte Fügeelement zwangsläufig in dieser Bremsstrecke blockiert, bis der Stempel das Fügeelement in das mindestens eine Bauteil setzt.

Neben der Nutzung von Bremsstegen wurde der Fügekanal ebenfalls mit Bremsbacken ausgestattet. Zu diesem Zweck besteht die radiale Innenwand des Fügekanals einer Fügevorrichtung aus einer Mehrzahl von Backen, die in radialer Richtung bewegbar angeordnet sind. Mithilfe einer Federvorspannung dieser Backen radial einwärts ist gewährleistet, dass ein zugeführtes Fügeelement im Fügekanal klemmend gehalten wird. Sobald ein Fügevorgang beginnt, bewegt sich der Stempel zwischen diese Bremsbacken, schiebt dabei das Fügeelement in Fügerichtung vor sich her und drückt die Bremsbacken radial nach au-βen. Somit dienen diese Bremsbacken genauso wie die oben genannten Bremsstege dem Positionieren und Anordnen des Fügeelements im Fügekanal, ohne den nachfolgenden Fügevorgang zu behindern.

Es hat sich als nachteilig erwiesen, dass weder die Bremsstege noch die Bremsbacken für eine verlässliche Positionierung des Fügeelements im Fügekanal sorgen. Dies ist gerade dann der Fall, wenn das Fügeelement im Vergleich zu seinem Kopfdurchmesser relativ kurz ist. In diesem Fall neigen die Fügeelemente zu einem Verkippen innerhalb des Fügekanals, was durch die Bremsbacken oder Bremsstege nicht verhindert wird. Ein weiterer Nachteil besteht darin, dass die Bremsbacken und Bremsstege relativ viel Platz benötigen, da nur mit einer Mindestlänge eine ausreichend geringe Neigung radial einwärts in den Fügekanal realisiert werden kann.

Aus WO 99/08007 A1 ist ein weibliches Befestigungselement bekannt, das zum Aufschieben auf ein männliches Befestigungselement, das mit einem Außengewinde versehen ist, ausgelegt ist. Das weibliche Befestigungselement weist eine axiale Bohrung zur Aufnahme des männlichen Befestigungselements sowie eine Vielzahl von Segmenten auf, die um die axiale Bohrung herum angeordnet sind und jeweils ein oder mehrere Innengewindeteile aufweisen, die zusammen das Innengewinde des weiblichen Befestigungselements bilden. Die Segmente sind beweglich zwischen einer radial äußeren Position, in der das männliche Befestigungselement ohne eine Schraubbewegung des weiblichen Befestigungselements gegenüber dem männlichen Befestigungselement in das weibliche Befestigungselement eingeführt werden kann, und einer radial inneren Position, in der die Schraubengewindeteile mit dem Außengewinde des männlichen Befestigungselements in Eingriff stehen. Das weibliche Befestigungselement umfasst einen aus einem Blechmaterial hergestellten Schalenkörper mit einer die axiale Bohrung umschließenden Schalenwand, wobei jedes Segment einstückig mit dem metallischen Schalenkörper verbunden ist, durch einen im Wesentlichen U-förmigen Einschnitt in der Schalenwand des Schalenkörpers begrenzt ist, sich über einen Fuß an die Schalenwand anschließt und um eine Biegelinie, die im Bereich des Fußes liegt, zur Mitte der Axialbohrung gebogen ist.

Aufgrund obiger Nachteile stellt sich vorliegende Erfindung die Aufgabe, eine geeignete und verlässliche Positionierhilfe für Fügeelemente in Fügevorrichtungen bereitzustellen, sodass ein Fügevorgang durch eine mögliche Fehlpositionierung eines Fügeelements im Fügekanal bzw. unterhalb des Stempels in Fügerichtung nicht behindert wird.

### 3. Zusammenfassung der Erfindung

Die obige Aufgabe wird durch eine Federarmhülse gemäß dem unabhängigen Patentanspruch 1, durch eine Fügevorrichtung gemäß Patentanspruch 8 sowie durch ein Herstellungsverfahren gemäß dem unabhängigen Patentanspruch 10 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Die erfindungsgemäße Federarmhülse, mit der ein Fügeelement einer Fügevorrichtung positionierbar ist, weist die folgenden Merkmale auf: einen rohrförmigen Abschnitt, der durch eine umlaufende Wand gebildet wird, die umlaufende Wand weist in Umfangsrichtung eine Mehrzahl zueinander regelmäßig beabstandeter U-förmiger Durchbrüche auf, die eine Mehrzahl einseitig befestigter Federarme bilden, die radial einwärts in den rohrförmigen Abschnitt geneigt sind und sich ausgehend von einem festen Ende in eine erste Längsrichtung erstrecken. In der erfindungsgemäßen Federarmhülse sind in der ersten Längsrichtung des rohrförmigen Abschnitts an einer ersten Länge und danach an mindestens einer zweiten Länge jeweils mindestens drei Federarme in Umfangsrichtung gleichmäßig voneinander beabstandet angeordnet. Die mindestens drei Federarme der zweiten Länge sind an Umfangspositionen angeordnet, die zwischen den mindestens drei Federarmen der ersten Länge liegen.

Die Federarmhülse hat die Funktion, nahe der Unterseite eines Stempels einer Fügevorrichtung ein Fügeelement passend für den bevorstehenden Fügevorgang zu positionieren und zu halten. Zu diesem Zweck soll das Fügeelement mithilfe der Federarmhülse derart ausgerichtet werden, dass eine Kopfoberseite, beispielsweise die Oberseite des Kopfes eines Stanzniets, annähernd parallel zu der benachbart angeordneten Stempelseite orientiert ist. Entsprechend nimmt dann zu Beginn eines Fügevorgangs der Stempel das Fügeelement über die annähernd parallel orientierte Oberseite in Fügerichtung mit und setzt das Fügeelement in das mindestens eine Bauteil. Dazu weist die Federarmhülse einen röhrenförmigen Abschnitt auf, der derart dimensioniert ist, dass das Fügeelement trotz seiner radialen Dimension durch diesen Abschnitt passt. Den röhrenförmigen Abschnitt radial einwärts verengend sind Federarme vorgesehen. Diese Federarme ragen federnd geneigt radial einwärts, wobei sie vorzugsweise in Fügerichtung geneigt sind. Mit anderen Worten ist es eine bevorzugte Ausführungsform vorliegender Erfindung, die Federarme alle in die gleiche Längsrichtung des röhrenförmigen Abschnitts geneigt anzuordnen. Aufgrund ihrer radial einwärts orientierten Neigung verjüngen die Federarme den Innendurchmesser des röhrenförmigen Abschnitts. Entsprechend wird ein Fügeelement im röhrenförmigen Abschnitt durch die Federkraft der mehreren Federarme lösbar gehalten. Das Lösen erfolgt dann durch die Bewegung des Stempels, wenn dieser das federnd zwischen den Federarmen festgeklemmte Fügeelement durch den röhrenförmigen Abschnitt in Fügerichtung bewegt. Um die genannten Federarme zu definieren, sind U-förmige Durchbrüche in der radialen Innenwand des rohrförmigen Abschnitts vorgesehen. Diese Durchbrüche erstrecken sich vollständig durch die Wand des rohrförmigen Abschnitts, sodass die Grundkonfiguration der einzelnen Federarme entsteht.

Gemäß einer bevorzugten Ausführungsform der erfindungsgemäßen Federarmhülse weist der rohrförmige Abschnitt einen runden oder einen polygonalen Querschnitt auf.

Die äußere Gestalt des rohrförmigen Abschnitts kann nahezu beliebig gewählt werden. Entscheidend ist aber, dass die radial einwärts federnd geneigt angeordneten Federarme den rohrförmigen Abschnitt in seinem Inneren so weit verjüngen, dass ein zugeführtes Fügeelement durch diese Federarme festgehalten wird und nicht durch den rohrförmigen Abschnitt hindurch gleiten kann. Da bei gängigen Fügevorrichtungen das Mundstück oder der Fügekanal häufig einen runden Querschnitt aufweist, ist es bevorzugt, den rohrförmigen Abschnitt mit einem runden Querschnitt oder einem regelmäßig polygonalen Querschnitt vorzusehen. Entsprechend wird dann ebenfalls bevorzugt die Federarmhülse in einen Fügekanal oder ein Mundstück der Fügevorrichtung eingesetzt oder direkt am Setzkopf benachbart zur Stempelunterseite angeordnet. An der dortigen Position gewährleistet die Federarmhülse ein passendes Positionieren und Halten eines zugeführten Fügeelements, welches eine reibungslose Realisierung des Fügevorgangs unterstützt.

Die vorliegende Erfindung sieht vor, dass in der Federarmhülse in der ersten Längsrichtung des rohrförmigen Abschnitts an einer ersten Länge und danach an mindestens einer zweiten Länge jeweils mindestens drei Federarme in Umfangsrichtung gleichmäßig voneinander beabstandet angeordnet sind.

Aus der oben beschriebenen Konfiguration geht hervor, dass es innerhalb des rohrförmigen Abschnitts betrachtet in Längsrichtung zumindest zwei Stufen oder Längenniveaus gibt, an denen an der radialen Innenseite des rohrförmigen Abschnitts Federarme angeordnet sind. Diese stufenweise Anordnung einer ersten Mehrzahl von Federarmen und zumindest einer zweiten Mehrzahl an Federarmen gewährleistet, dass ein Fügeelement an der ersten Stufe von Federarmen oder zumindest, falls dies nicht gelingen sollte, an der zweiten Stufe der Federarmen gehalten wird. Des Weiteren stellt diese stufenweise Anordnung der Federarme in unterschiedlichen Längenbereichen des rohrförmigen Abschnitts sicher, dass auch während der Bewegung des Stempels in Fügerichtung das Fügeelement in seiner Position weiterhin durch die Federarme unterstützt wird.

Beispielhaft können die mindestens drei Federarme der ersten Länge und die mindestens drei Federarme der zweiten Länge an gleichen Umfangspositionen im Vergleich zueinander angeordnet sein. Erfindungsgemäß sind die mindestens drei Federarme der zweiten Länge an Umfangspositionen angeordnet, die zwischen den mindestens drei Federarmen der ersten Länge liegen.

Gemäß einer ersten bevorzugten Ausführungsform der erfindungsgemäßen Federarmhülse sind an den oben genannten Stufen die mehreren Federarme gleichmäßig an der radialen Innenseite des rohrförmigen Abschnitts in Umfangsrichtung verteilt angeordnet. Die gleichmäßige Anordnung stellt sicher, dass die Federarme gleichmäßig verteilt um das zu positionierende oder zuhaltende Fügeelement entsprechend federnde Haltekräfte aufbringen. Auf diese Weise wird bevorzugt vermieden, dass die am Fügeelement angreifenden Federarme eine Positionierung im Zentrum des rohrförmigen Abschnitts und in einer passenden Orientierung zur Stempelunterseite stören.

Da vorzugsweise auf mehreren Stufen, Etagen oder nach mehreren Längenabschnitten bezogen auf die Länge des rohrförmigen Abschnitts jeweils eine Mehrzahl von Federarmen angeordnet ist, werden die Federarme benachbarter Stufen gemäß unterschiedlicher Alternativen angeordnet. Eine erste Alternative besteht darin, dass die Federarme benachbarter Stufen an der gleichen Umfangsposition angeordnet sind. Das bedeutet, dass in Längsrichtung des rohrförmigen Abschnitts betrachtet mehrere Federarme in Längsrichtung hintereinander angeordnet sind.

Erfindungsgemäß sind die Federarme benachbarter Stufen radial versetzt zueinander angeordnet. Entsprechend sind vorzugsweise die Federarme der nächstfolgenden Stufe im Zwischenraum der vorhergehenden

Stufe angeordnet. Dies gewährleistet eine zusätzliche Sicherheit beim Positionieren und/oder Halten des Fügeelements innerhalb der Federarmhülse.

Gemäß einer weiteren bevorzugten Ausführungsform vorliegender Erfindung weist der rohrförmige Abschnitt der Federarmhülse einen Querschnitt eines regelmäßigen, mindestens sechseckigen geradzahligen Polygons auf, in dem an der ersten Länge die Federarme an geradzahligen Polygonflächen und an der zweiten Länge an ungeradzahligen Polygonflächen angeordnet sind.

Die soeben zusammengefasste Ausführungsform setzt bevorzugt die zuvor beschriebene stufenförmige Anordnung der Federarmhülsen um. Als Positionierhilfe wird dazu ein polygonaler Querschnitt des rohrförmigen Abschnitts verwendet. Dieser polygonale Querschnitt sollte mindestens sechs Ecken aufweisen, wobei eine geradzahlige Eckenanzahl des Polygons bevorzugt ist. Eine geradzahlige Anzahl gewährleistet, dass zwischen zwei benachbarten Federarmen in einer radialen Ebene jeweils eine Polygonfläche frei bleiben kann. Bei dieser Anordnung besteht dann die bevorzugte Möglichkeit, dass in der darauf folgenden Stufe der Federarme die Federarme an den Polygonflächen angeordnet sind, wo zuvor an gleicher Umfangsposition eine Freifläche zwischen zwei benachbarten Federarmen gewählt worden war.

Natürlich ist es ebenfalls bevorzugt, den rohrförmigen Abschnitt mit einem ungeradzahligen polygonalen Querschnitt vorzusehen. In diesem Zusammenhang ist es von Vorteil, wenn jede Polygonfläche eine Federzunge aufweist. Andernfalls sind die Federarme ungleichförmig entlang der Umfangsrichtung verteilt angeordnet, was möglicherweise zu Störungen beim Positionieren und Halten der Fügeelemente im rohrförmigen Abschnitt führen könnte.

Gemäß einer weiteren bevorzugten Ausführungsfonn der erfindungsgemäßen Federarmhülse sind die erste Länge und die zweite Länge sowie die Länge der Federarme derart gewählt, dass die Federarme der ersten Länge und die Federarme der zweiten Länge in Längsrichtung des rohrförmigen Abschnitts einander überlappen.

Während der Zufuhr eines Fügeelements zum Herstellen einer Verbindung oder zum Positionieren unterhalb des Stempels ist es teilweise erforderlich, dass ein Fügeelement von den Federarmen der ersten Stufe an die Federarme der nächsten oder benachbarten Stufe übergeben wird. Um hier eine sprunghafte Übergabe mit eventuell störenden radial einwärts gerichteten Federspannungen zu vermeiden, ist die Länge der Federarme der beiden benachbarten Stufen derart gewählt, dass sich diese Federarme in Längsrichtung des rohrförmigen Abschnitts überlappen. Auf diese Weise gleitet vorzugsweise das Fügeelement aus einem haltenden Federspannungsbereich der Federarme der ersten Stufe in einen haltenden mechanischen Spannungsbereich der Federarme der zweiten Stufe. Entsprechend wird auf diese Weise das Fügeelement innerhalb des rohrförmigen Abschnitts annähernd kontinuierlich bei seiner Längsbewegung durch die Federarmhülse durch die unterschiedlichen Federarme der benachbarten Stufen gehalten. Es versteht sich, dass aufgrund der nicht identisch einstellbaren radial einwärts wirkenden Federarme gewisse Schwankungen in den radial einwärts gerichteten mechanischen Spannungen möglich sind. Diese gefährden aber nicht das oben beschriebene Grundkonzept zum Halten und Positionieren des Fügeelements innerhalb der Federarmhülse.

Gemäß einer weiteren bevorzugten Ausführungsform der Federarmhülse ist diese aus mindestens zwei axialen Hülsenabschnitten zusammengesetzt, die axial angrenzend aneinander angeordnet sind. Vorzugsweise werden diese Hülsenabschnitte innerhalb des Fügekanals oder Mundstücks eines Setzgeräts oder allgemein einer Fügevorrichtung gehalten.

Eine weitere bevorzugte Ausführungsform der Federarmhülse sieht vor, dass an einem oder an beiden axialen Enden der Federarmhülse regelmäßig angeordnete Freilassungen benachbart zu streifenartigen Endbereichen vorgesehen sind. In Bezug auf diese bevorzugte Konstruktion setzt sich gemäß einer anderen Ausführungsform vorliegender Erfindung die Federarmhülse aus mindestens zwei Hülsenabschnitten zusammen, deren axiale Enden mit den regelmäßig angeordneten Freilassungen und den benachbarten streifenartig Endbereichen ineinander verschachtelt angeordnet sind. Auf diese Weise wird innerhalb des Fügekanals oder beispielsweise eines Mundstücks eine Anordnung der Hülsenabschnitte gewährleistet, die sich gegenseitig in Umfangsrichtung und auch in Längsrichtung aneinander abstützen. Dies stellt eine verlässliche Position der Federarmhülse gerade auch während einer Mehrzahl von Fügevorgängen sicher.

Gemäß einer ersten bevorzugten Ausführungsform ist die umlaufende Wand geschlossen ausgebildet. In einer zweiten bevorzugten Ausführungsform ist die umlaufende Wand unterbrochen ausgebildet.

Vorliegende Erfindung offenbar zudem eine Fügevorrichtung mit einem Mundstück, insbesondere ein Setzgerät für Stanzniete oder Bolzen, wobei innerhalb des Mundstücks eine Federarmhülse gemäß einer der oben beschriebenen Ausführungsformen angeordnet ist.

Fügevorrichtungen sind allgemein bekannt. In diesem Zusammenhang sind gerade Setzgeräte für Stanzniete, wie beispielsweise Vollstanzniete oder Halbhohlstanzniete bevorzugt. Des Weiteren bezieht sich die vorliegende Anwendung der Federarmhülse aber auch auf Bolzenschussgeräte, die sowohl in der Automobilindustrie wie auch in der Bauindustrie breite Anwendung finden.

Gemäß einer bevorzugten Ausführungsform der erfindungsgemäßen Fügevorrichtung weist diese ein Mundstück mit einem Fügekanal auf, der angrenzend an ein Ende in einer Fügerichtung einen radial einwärts ragenden Haltekragen umfasst, an dem sich die Federarmhülse in axialer Richtung abstützt.

Vorliegende Erfindung offenbar zudem ein Herstellungsverfahren für eine Federarmhülse gemäß den oben beschriebenen Ausführungsformen. Dieses Herstellungsverfahren weist die folgenden Schritte auf: Bereitstellen eines Flächenelements mit einer Mehrzahl zueinander regelmäßig beabstandet U-förmiger Durchbrüche, die eine Mehrzahl einseitig befestigter Federarme bilden, die sich ausgehend von einem festen Ende in eine erste Längsrichtung erstrecken, Verformen des Flächenelements in einen rohrförmigen Abschnitt, der einen Durchgangskanal definiert und Verformen der Federarme radial einwärts in den Durchgangskanal, sodass sie geneigt angeordnet sind.

Aus dem obigen Herstellungsverfahren geht hervor, dass ein Flächenelement die Ausgangsform für das Herstellen des rohrförmigen Abschnitts bildet. Dieses Flächenelement besteht vorzugsweise aus unterschiedlichen Materialien, wie beispielsweise einem Federblech, Metall generell, Kunststoff oder einem Metall-Kunststoff-Verbund. Es sind auch weitere Materialgestaltungen denkbar, solange sie die Konfiguration von radial einwärts angeordneten Federarmen gewährleisten.

Das oben genannte Flächenelement wird mit Hilfe geeigneter Verfahren, wie beispielsweise dem Blechbiegen oder dem Warmverformen von Kunststoffen in die geeignete Form gebracht, sodass es einen rohrförmigen Abschnitt bereitstellt. Vor dem Herstellen dieses rohrförmigen Abschnitts werden aber vorzugsweise im vorhandenen Flächenelement die U-förmigen Ausschnitte erzeugt. Denn diese Ausschnitte gewährleisten, dass später die radial einwärts ragenden Federarme gebildet werden können. In einem bevorzugten abschließenden Schritt werden dann die radial einwärts ragenden Federarme konfiguriert, sodass diese den Durchgangskanal des rohrförmigen Abschnitts verjüngen.

Gemäß einer weiteren bevorzugten Ausführungsform des erfindungsgemäßen Herstellungsverfahrens ist das Flächenelement ein Federblech, welches lasergeschnitten oder geätzt oder gestanzt wird. Die hier genannten bevorzugten Verfahren, d. h. das Laserschneiden, das Ätzen sowie das Stanzen sind bekannte Verfahren zur Materialbearbeitung.

Gemäß einer weiteren bevorzugten Ausführungsform des erfindungsgemäßen Herstellungsverfahrens wird der rohrförmige Abschnitt derart verformt, dass er einen 6- oder 8-eckigen regelmäßigen Querschnitt aufweist.

Zudem weist das Herstellungsverfahren vorzugsweise folgenden Schritt auf: Biegen der Federarme radial einwärts in den Durchgangskanal.

Anhand der oben beschriebenen Verfahrensschritte ist erkennbar, dass das vorliegende Herstellungsverfahren zwar auf klassische Bearbeitungsmöglichkeiten beispielsweise von Metallen zurückgreift, die dann aber auf die spezielle Formgestaltung der Federarmhülse führen.

Gemäß einer weiteren bevorzugten Ausgestaltung des vorliegenden Herstellungsverfahrens besteht das oben genannte Flächenelement aus Kunststoff. Dieses wird zudem bevorzugt lasergeschnitten oder geätzt oder gestanzt, um dann daraus die Federarmhülse herzustellen.

In einer bevorzugten Ausführungsform des Herstellungsverfahrens wird der rohrförmige Abschnitt durch eine umlaufende Wand gebildet. In einer ersten Alternative ist die umlaufende Wand geschlossen ausgebildet. In einer zweiten Alternative ist die umlaufende Wand unterbrochen ausgebildet.

### 4. Zusammenfassung der begleitenden Zeichnungen

Die bevorzugten Ausführungsformen vorliegende Erfindung werden unter Bezugnahme auf die begleitende Zeichnung näher erläutert. Es zeigen:
- Figur 1: eine exemplarische schematische Darstellung einer Elementzufuhr einer Fügevorrichtungen, in der im Fügekanal oder im Mundstück eine bevorzugte Ausführungsform der Federarmhülse angeordnet ist,
- Figur 2: eine Schnittdarstellung durch einen bevorzugten Fügekanal mit darin angeordneter Federarmhülse gemäß einer bevorzugten Ausführungsform,
- Figur 3: eine perspektivische Ansicht einer bevorzugten Federarmhülse,
- Figur 4: eine radiale Schnittdarstellung der Federarmhülse aus Figur 3,
- Figur 5: eine axiale Schnittdarstellung der Federarmhülse aus Figur 3,
- Figur 6: eine perspektivische Ansicht einer weiteren bevorzugten Ausführungsform einer Federarmhülse,
- Figur 7: eine axiale Schnittdarstellung der Federarmhülse aus Figur 6,
- Figur 8: eine perspektivische Darstellung von zwei bevorzugten Federarmhülsen, die miteinander als eine gemeinsame Federarmhülse kombinierbar sind,
- Figur 9: die Federarmhülsen aus Figur 8 in einer kombinierten Anordnung, in der sie bevorzugt auch in einem Fügekanal einer Fügevorrichtung aufnehmbar sind,
- Figur 10: eine perspektivische Ansicht einer weiteren bevorzugten Ausführungsform einer Federarmhülse,
- Figur 11: eine radiale Schnittdarstellung der Federarmhülse aus Figur 10,
- Figur 12: eine bevorzugte Illustration bezüglich der Bewegung eines Fügeelements durch eine bevorzugte Federarmhülse,

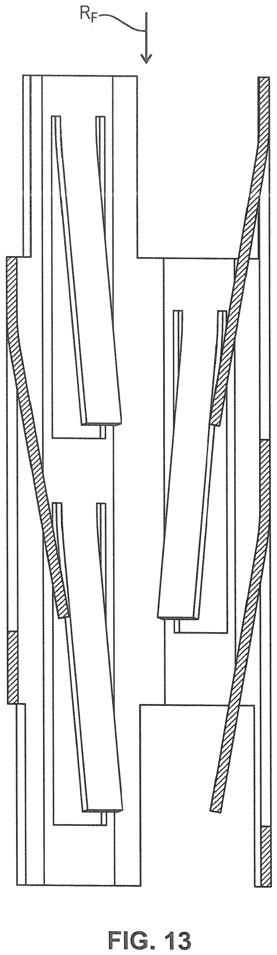

- Figur 13: eine teilweise Schnittansicht einer bevorzugten Ausführungsform einer Federarmhülse,
- Figur 14: eine vergrößerte Darstellung eines Federarms in einer Anfangsposition,
- Figur 15: eine vergrößerte Darstellung eines Federarms in einer radial auswärts ausgelenkten Position und
- Figur 16: ein Flussdiagrammen einer bevorzugten Ausführungsform eines Herstellungsverfahrens der Federarmhülse.

### 5. Detaillierte Beschreibung der bevorzugten Ausführungsformen

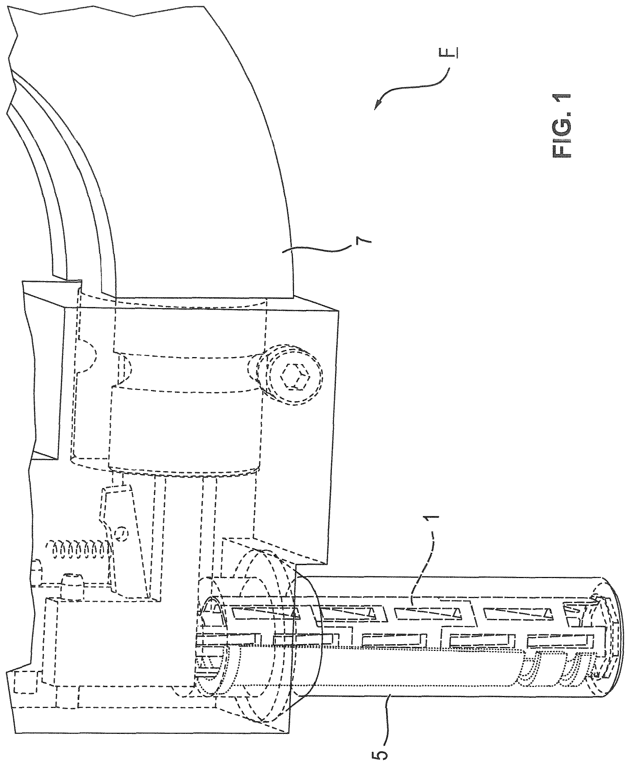

Die Federarmhülse 1 wird vorzugsweise in einem Mundstück oder Fügekanal 5 einer Fügevorrichtung F angeordnet. Figur 1 zeigt eine Teilansicht der Fügevorrichtungen F, die eine Elementzufuhr 7 angrenzend an einen Eingang in den Fügekanal 5 zeigt. Die hülsenartige aufgebaute Federarmhülse 1 (siehe unten) wird innerhalb des Fügekanals 5 vorzugsweise über einen radialen Reibschluss mit der radialen Innenwand des Fügekanals 5 gehalten.

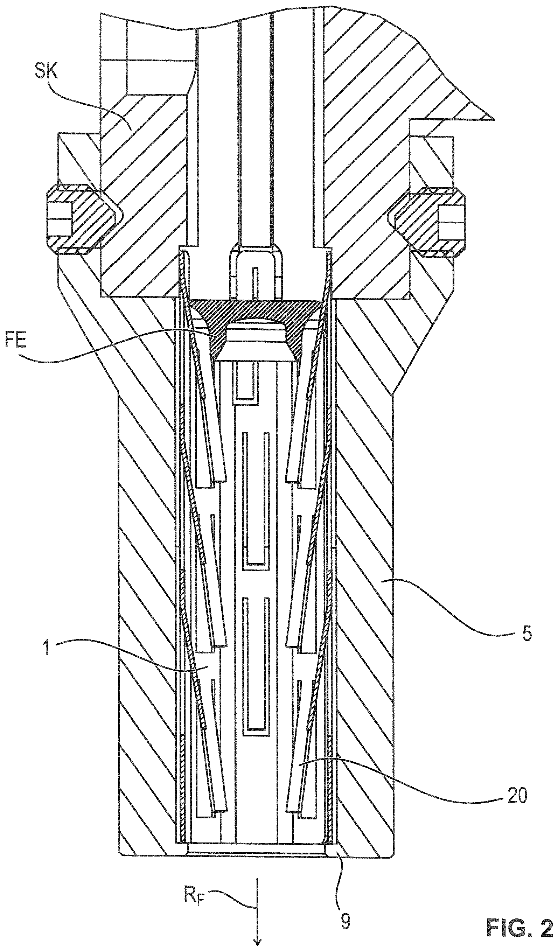

Gemäß einer weiteren bevorzugten Anordnung der Federarmhülse 1 im Fügekanal oder Mundstück 5 stützt sich die Federarmhülse 1 an einem Radialkragen 9 ab. Der Radialkragen 9 ist auch in der Schnittdarstellung von Figur 2 erkennbar. Der Radialkragen 9 ist benachbart zum Ausgang des Fügekanals 5 angeordnet. Da der Radialkragen 9 radial einwärts bevorzugt umfänglich umlaufend in den Fügekanal 5 ragt, verringert er die Durchgangsöffnungen durch den Fügekanal 5. An diesem Radialkragen 9 stützt sich ein Austrittsende 3 der Federarmhülse 1 ab, sodass sie während eines Fügevorgangs durch einen Stempel oder ein Fügeelement FE nicht aus dem Fügekanal 5 gedrückt werden kann.

Während sich die Federarmhülse 1 mit dem Austrittsende 3 betrachtet in Fügerichtung R_{P} am Radialkragen 9 abstützt, ist es ebenfalls bevorzugt, die Federarmhülse 1 mit einem Eintrittsende 2 am Setzkopf SK zu befestigen. Diese Befestigung besteht bevorzugt aus einer Reibschlussverbindung oder einer Rastverbindung oder einer ähnlichen Konstruktion.

Gemäß einer weiteren bevorzugten Ausführungsform (nicht gezeigt) der Federarmhülse 1 ist diese direkt ohne Fügekanal 5 mit dem Setzkopf SK der Fügevorrichtung F verbunden. Entsprechend ersetzt die Federarmhülse 1 den Fügekanal 5 und sorgt für eine reduzierte Störkontur der Fügevorrichtungen F.

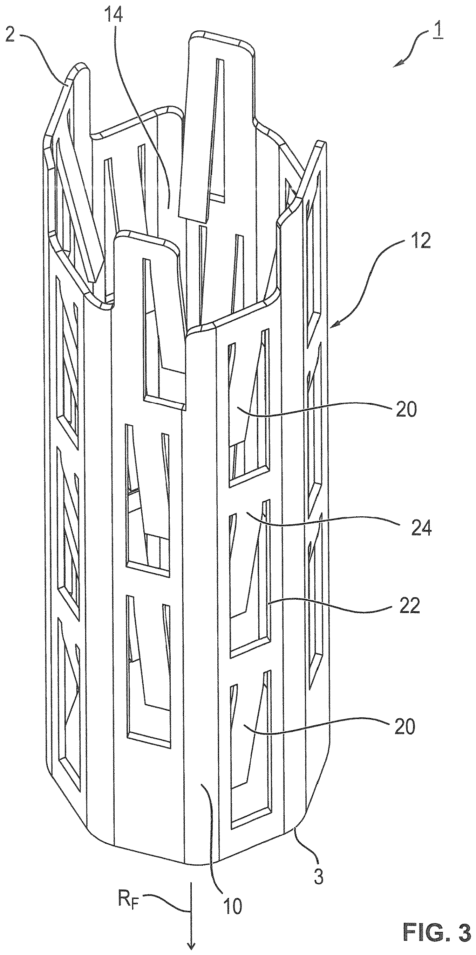

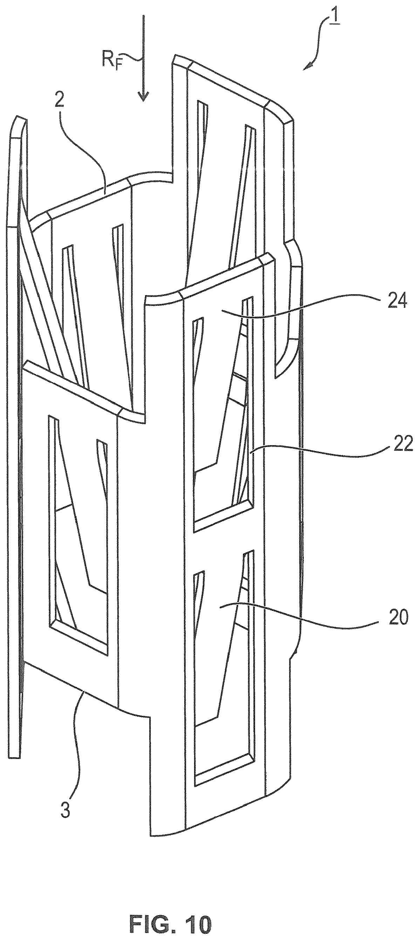

Die Figuren 3 und 10 zeigen perspektivische Ansichten unterschiedlicher bevorzugter Ausführungsformen der erfindungsgemäßen Federarmhülse 1. Die Federarmhülse 1 wird aus einer umlaufenden Wand 10 gebildet, die zu einem rohrförmigen Abschnitt 12 geformt ist. Der rohrförmige Abschnitt 12 definiert einen Durchgangskanal 14, durch den sich gemäß Figur 2 das Fügeelement FE bewegt. Die umlaufende Wand 10 ist gemäß einer ersten Alternative geschlossen ausgebildet. Gemäß einer zweiten Alternative ist die umlaufende Wand unterbrochen ausgebildet.

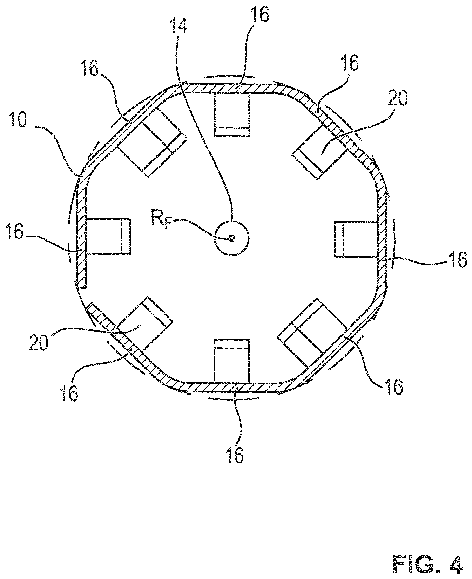

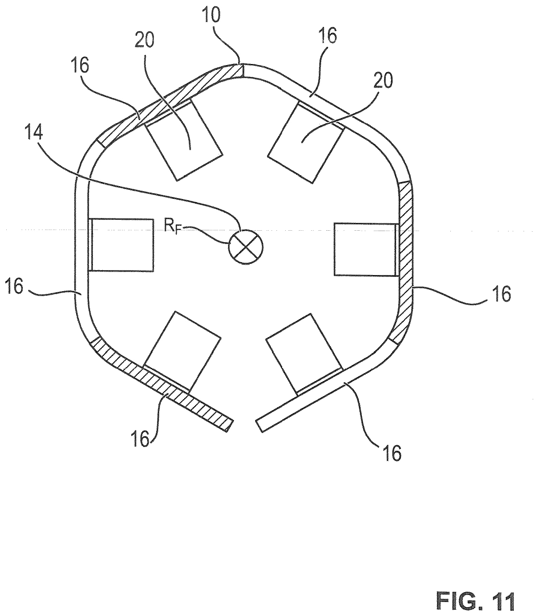

Gemäß unterschiedlichen bevorzugten Ausführungsformen vorliegende Erfindung weist der rohrförmigen Abschnitt 12 unterschiedliche Querschnittsformen auf. Gemäß einer bevorzugten Ausgestaltung (nicht gezeigt) besitzt der rohrförmigen Abschnitt 12 eine runde Außenkontur. Weiterhin bevorzugt wird der rohrförmigen Abschnitt 12 mit einer polygonalen Außenkontur bereitgestellt (siehe Figuren 4 und 11). Wie sich aus der weiteren Beschreibung ergibt, hat die Außenkontur eine geradzahlige polygonale Form, d. h. es ist eine gerade Anzahl an Seitenflächen im Querschnitt der Federarmhülse 1 erkennbar. Es ist ebenfalls denkbar, eine polygonale Form mit einer ungeradzahligen Anzahl von Seitenflächen vorzusehen. In Figur 4 hat der polygonale Querschnitt acht Seitenflächen 16 oder Polygonflächen, während in Figur 11 sechs Polygonflächen 16 erkennbar sind.

Wie man in den perspektivischen Ansichten, beispielsweise der Figuren 3 und 10, erkennen kann, ist die Federarmhülse 1 in Fügerichtung R_{F} oder in Längsrichtung betrachtet etagenartig aufgebaut. Eine Etage bezeichnet in diesem Zusammenhang eine erste Länge L₁ gemessen vom Eintrittsende 2 der Federarmhülse 1. An dieser ersten Länge L1 oder auf dieser ersten Etage und bevorzugt an weiteren folgenden Längen L₂, L₃, L₄ bzw. Etagen sind über den Umfang des rohrförmigen Abschnitts 12 gleichmäßig verteilt mehrere Federarme 20 angeordnet. Die Federarme 20 sind einseitig befestigt und in den Durchgangskanal 14 geneigt angeordnet. Wie man anhand der Figuren erkennen kann, sind alle Federarme 20 in Fügerichtung RF geneigt angeordnet.

Die Federarme 20 sind an drei Seiten von einem durchgehenden U-förmigen Durchbruch 22 durch die umlaufende Wand 10 umgeben. Entsprechend ist jeder Federarm 20 an nur einer Seite 24 mit der Wand 10 verbunden.

Eine bevorzugte Anordnung der Federarm 20 wird bezugnehmend auf die erste Länge L₁ bzw. die erste Etage der Federarmhülse 1 beschrieben. Wie man anhand von Figur 4 erkennen kann, weist der rohrförmigen Abschnitt 12 vorzugsweise den polygonalen Querschnitt mit acht Polygonalflächen 16 auf. An der ersten Länge L₁, die vorzugsweise an der Mitte der Federarm 20 gemessen wird, ist in Umfangsrichtung nur auf jeder zweiten Polygonalfläche 16 ein U-förmiger Durchbruch 22 und somit ein Federarm 20 angeordnet. Entsprechend sind die Federarme 20 an der radialen Innenseite des rohrförmigen Abschnitts 12 in Umfangsrichtung gleichmäßig verteilt angeordnet.

Auf der in Fügerichtung R_{F} folgenden nächsten Länge L₂ oder auf der zweiten Etage ist bevorzugt die gleiche Anzahl an Federarmen 20 an der radialen Innenseite des rohrförmigen Abschnitts 12 angeordnet, wie dies auf der ersten Etage L₁ der Fall ist. Die Federarme 20 der zweiten Etage bzw. Länge L₂ sind aber genau an den Polygonalflächen 16 angeordnet, an denen in der ersten Etage L₁ keine Federarme 20 angeordnet sind.

Zudem ist es bevorzugt, dass betrachtet in Fügerichtung R_{F} die Federarme 20 der zweiten Etage L₂ mit ihrer Verbindung 24 zur Wand 10 bereits beginnen, bevor ein Ende der Federarme 20 der ersten Länge L₁ oder Etage erreicht ist. Auf diese Weise ergibt sich eine verschachtelte Anordnung der Federarme 20 benachbarter Längen L₁, L₂ usw. bzw. benachbarter Etagen.

Da die Federarme 20 der einzelnen Etagen in den Durchgangskanal 14 geneigt angeordnet sind, wird ein sich durch den Durchgangskanal 14 bewegendes Fügeelement FE nahezu kontinuierlich durch die Federarme 20 gehalten. Dies gewährleistet bevorzugt eine Aufrechterhaltung der Orientierung des Fügeelements FE während seiner Bewegung in Fügerichtung RF durch den Durchgangskanal 14.

In diesem Zusammenhang ist es ebenfalls bevorzugt, die axiale Position und Neigung der Federarm 20 anzupassen, um eine optimale Führung des Fügeelements FE zu erzielen.

Gemäß einem Beispiel ist an jeder Polygonalfläche 16 der gleichen Etage ein Federarm 20 vorgesehen. Entsprechend würde die gleiche Anordnung der Federarme 20 auf der nächsten Etage in Fügerichtung R_{F} folgen. Bei dieser Anordnung ergibt sich keine verschachtelte Anordnung der Federarme 20. (nicht gezeigt)

Des Weiteren ist es möglich, trotz der gleichen Anordnung der Federarme 20 auf benachbarten Etagen jeweils mindestens eine Polygonalfläche 16 zwischen zwei benachbarten Federarmen 20 freizulassen.

Erfindungsgemäß und zusammenfassend ist es daher vorteilhaft, an der ersten Länge L₁ bzw. in der ersten Etage und danach an mindestens der zweiten Länge L₂ bzw. der zweiten Etage jeweils mindestens drei Federarme 20 in Umfangsrichtung gleichmäßig voneinander beabstandet anzuordnen. Diese mindestens drei Federarm 20 in der ersten Etage und in der nachfolgenden zweiten Etage werden gemäß einem Beispiel an den gleichen Umfangspositionen im Vergleich zueinander angeordnet. Im Unterschied dazu werden in der bevorzugten Ausgestaltung der vorliegenden Erfindung die Federarme 20 der zweiten Etage an Umfangspositionen angeordnet, an denen in der ersten Etage gerade keine Federarme 20 vorgesehen worden sind.

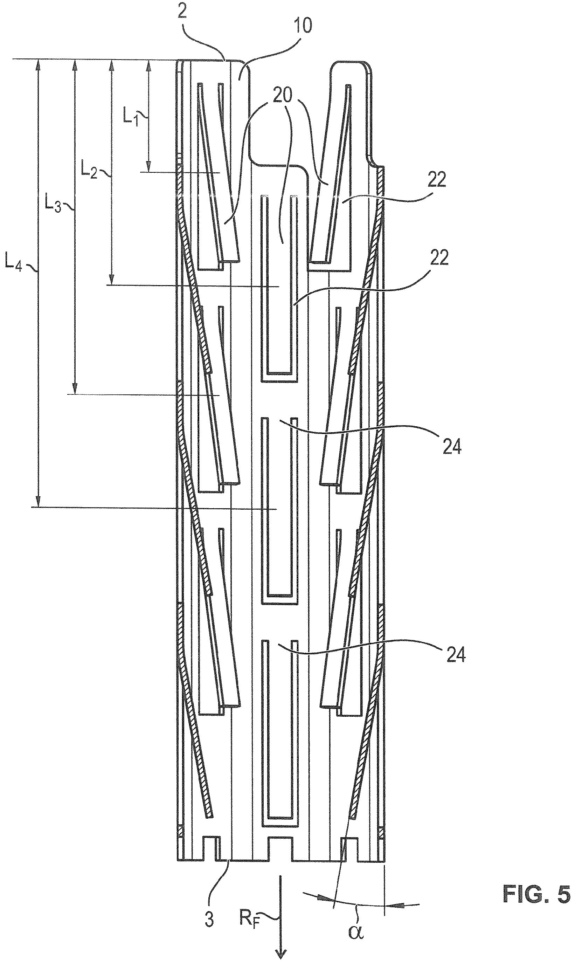

Anhand von Figur 5 ist erkennbar, dass die Federarme 20 um einen Winkel α radial einwärts in den Durchgangskanal 14 geneigt angeordnet sind. Der Winkel α liegt in einem Bereich von vorzugsweise 5°≤ α ≤20°, weiter bevorzugt 5°≤ α ≤ 15° und noch mehr bevorzugt 5° ≤ α ≤ 10°. In Abhängigkeit von einer Länge des Federarms 20 und seiner Federeigenschaften aufgrund des gewählten Materials der Federarmhülse 1 ist der Winkel α einstellbar, um das Fügeelement FE zu führen und/oder zu positionieren und/oder zu bremsen.

Gemäß der in Figur 2 gezeigten bevorzugten Ausführungsform der Fügevorrichtung F besteht die Federarmhülse 1 im Fügekanal 5 aus einem axial durchgehenden rohrförmigen Abschnitt 12. Dieser ist vorzugsweise an die Länge des Fügekanals 5 oder an die Länge einer notwendigen Bremsstrecke und/oder Positionierstrecke angepasst.

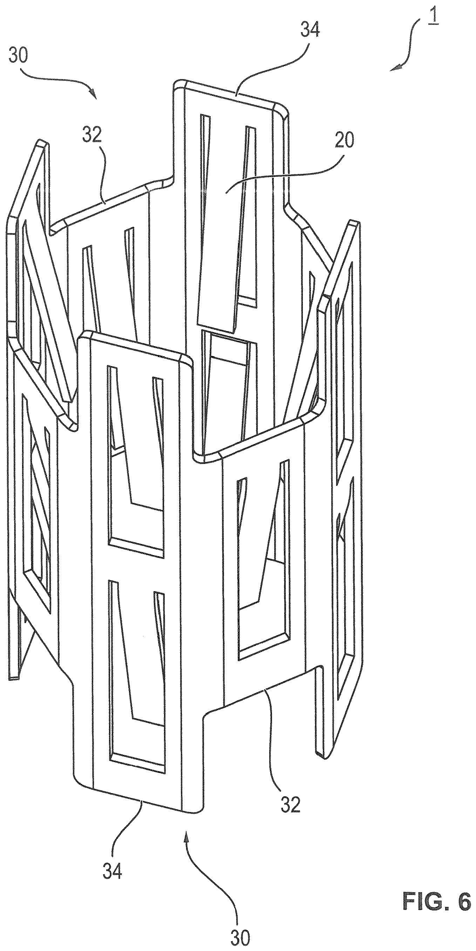

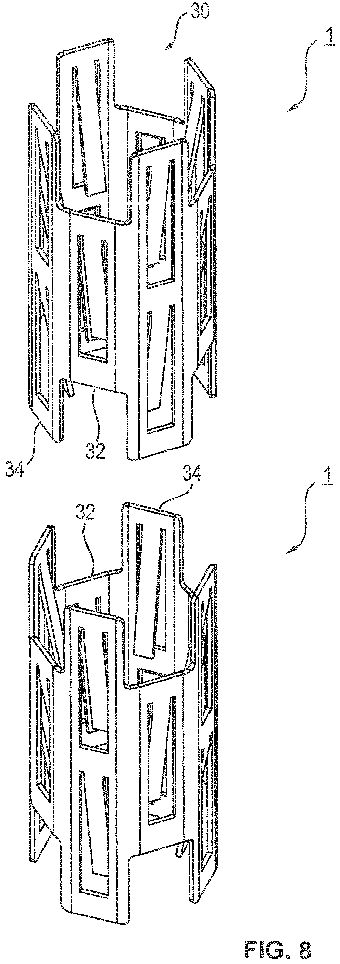

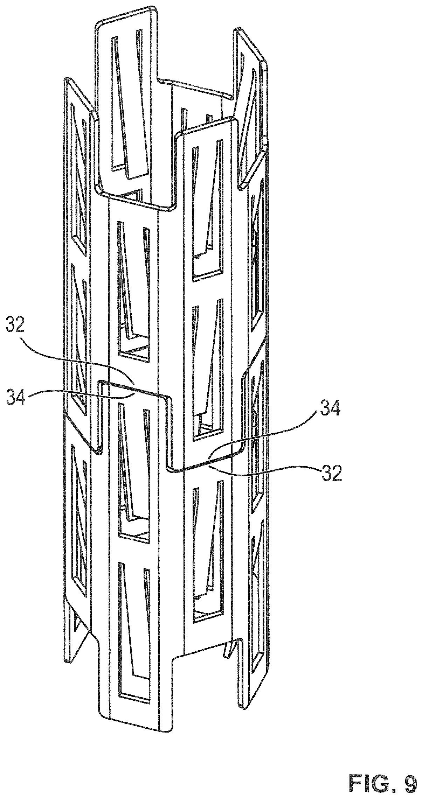

Gemäß der in den Figuren 6-9 dargestellten bevorzugten Ausführungsformen wird die Federarmhülse 1 in Figur 9 aus einer Mehrzahl von Federarmhülsen 1, hier zwei Federarmhülsen 1, zusammengesetzt. Diese Konstruktionsweise eröffnet die Flexibilität, dass unterschiedliche Längen von Fügekanälen 5 mit einer Basis-Federarmhülse 20 durch mehrfache Kombination ausgestattet werden können.

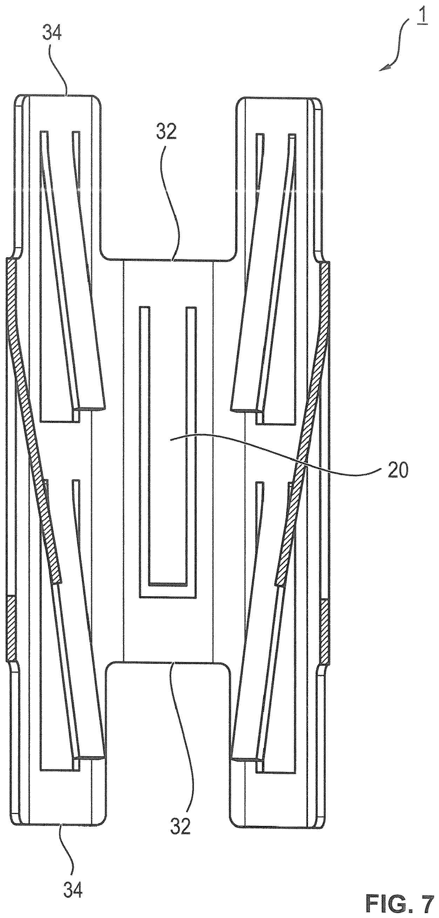

Die in den Figuren 6 und 7 gezeigte Basis-Federarmhülse 20 weist eine verschachtelte Anordnung der Federarm 20 auf, wie sie oben beschrieben worden ist. Zudem kann die Basis-Federarmhülse 1 einen polygonalen Querschnitt mit 6 oder 8 oder mehr Polygonalflächen aufweisen. Die genannte verschachtelte Anordnung der Federarme 20 bildet die Grundlage für eine Stufenkontur 30 der Wand 10 am Eintritts und/oder Austrittsende der Basis-Federarmhülse 1. Die Stufenkontur 30 besteht aus sich abwechselnden Freilassungen 32 und streifenartigen Endbereichen 34. Mithilfe der Stufenkontur 30 lassen sich mehrere Federarmhülsen 1 ineinander stecken und im Fügekanal 5 anordnen. Dies ist beispielsweise in Figur 1 zu erkennen, wo drei Federarmhülsen 1 im Fügekanal 5 angeordnet sind. Zu diesem Zweck greifen die streifenartigen Endbereiche 34 der einen Federarmhülse 1 in die Freilassungen 32 der anderen benachbarten Federarmhülse 1 ein. Die mehreren Federarmhülsen 1 unterstützen sich damit gegenseitig im Fügekanal 5.

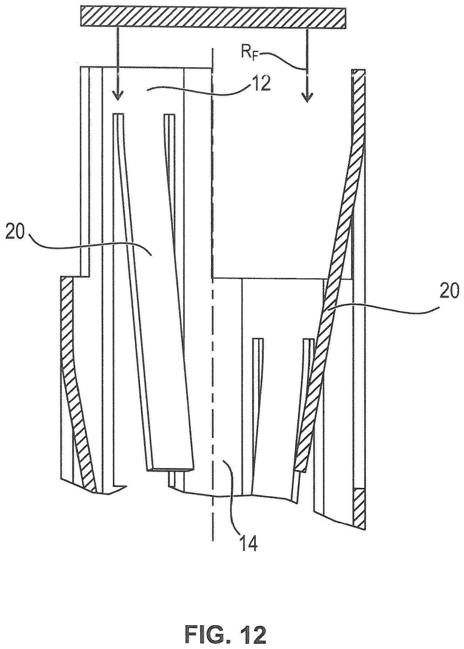

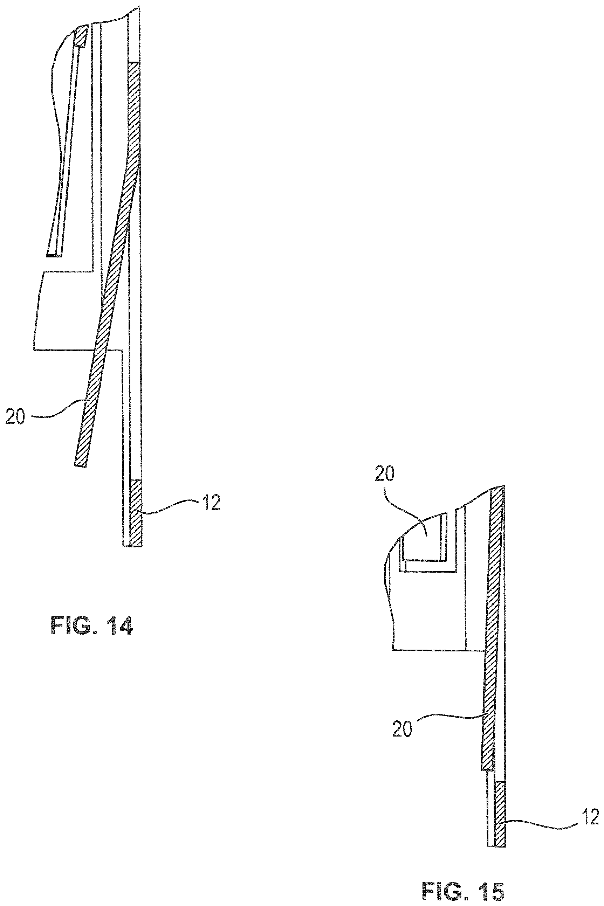

Bewegt sich das Fügeelement FE in Fügerichtung R_{F} in das Eintrittsende der Federarmhülse 1, wie es in Figur 12 schematisch angedeutet ist, trifft es auf die Federarm 20. Die Federarme 20 verengen mit ihrer federnden Anordnung und Neigung in den Durchgangskanal 14 des rohrförmigen Abschnitts 12 den Durchgangskanal 14. Entsprechend wird das Fügeelement FE zunächst klemmend bzw. reibschlüssig im Durchgangskanal 14 durch die Federarm 20 aufgehalten und positioniert. Die gleichmäßige Verteilung der Federarme 20 in Umfangsrichtung des Durchgangskanals 14 sorgt dafür, dass das Fügeelement FE vorzugsweise mit seiner entgegen der Fügerichtung RF angeordneten Seite, beispielsweise die Kopfoberseite eines Stanzniets, parallel oder zumindest annähernd parallel zu einer Stempelunterseite des Stempels der Fügevorrichtung F angeordnet ist. Dadurch wird eine passende Positionierung des Fügeelement FE für den Fügevorgang unterstützt. Während das Fügeelement FE in Fügerichtung R_{F} durch die Federarmhülse 1 bewegt wird, weichen die Federarme 20 federnd radial auswärts aus. Dies ist in den Figuren 14 und 15 veranschaulicht. Nach dem Passieren des Fügeelements FE federn die Federarme 20 wieder radial einwärts, um das nächste Fügeelement FE abzubremsen und/oder zu positionieren.

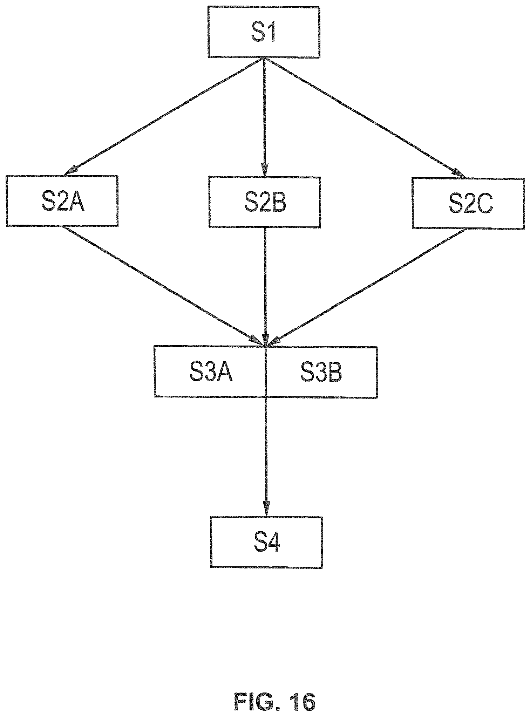

Unter Bezugnahme auf das Flussdiagramm der Figur 16 werden bevorzugte Alternativen des Herstellungsverfahrens für die Federarmhülse 1 beschrieben. Zunächst wird in einem ersten Schritt S 1 ein Flächenelement bereitgestellt, aus dem später der rohrförmige Abschnitt 12 geformt werden soll. Dieses Flächenelement besteht vorzugsweise aus Metall, beispielsweise aus einem Federstahl. Gemäß einer anderen bevorzugten Ausführungsform vorliegender Erfindung besteht das Flächenelement aus Kunststoff. In Abhängigkeit von dem mit der Federarmhülse 1 zu unterstützenden Fügevorgang sind somit unterschiedliche Materialalternativen zur Herstellung der Federarmhülse 1 einsetzbar.

Entsprechend der gewählten Materialalternative werden im Schritt S2 die mehreren regelmäßig zueinander beabstandeten U-förmigen Durchbrüche 22 in dem Flächenelement vorgesehen, um daraus die Federarme 20 zu bilden. Gemäß Verfahrensschritt S2A ist es bevorzugt, die Durchbrüche 22 mittels Laserschneiden herzustellen. Gemäß einer anderen bevorzugten Ausführungsform werden im Schritt S2B die Durchbrüche 22 geätzt. Eine noch andere Ausführungsform vorliegende Erfindung sieht vor, dass die Durchbrüche 22 im Flächenelement durch Stanzen hergestellt werden (Schritt S2C).

Nachdem das Flächenelement mit den Durchbrüchen 22 versehen worden ist, wird in einem darauf folgenden Schritt S 3 das Flächenelement in den rohrförmigen Abschnitt 12 mit Durchgangskanal 14 verformt. Gemäß einer bevorzugten Ausführungsform dieses Verfahrensschritte erfolgt das Verformen unter der Zufuhr von Wärme (siehe Schritt S 3A). Es ist ebenfalls bevorzugt, dass Flächenelement durch Biegen

(Schritt S 3B) in die passende Form zu bringen. Natürlich kann ebenfalls dieses Biegen im Schritt S 3B durch die Zufuhr von Wärme unterstützt werden.

In Anlehnung an die oben beschriebenen unterschiedlichen bevorzugten Ausführungsformen der Federarmhülse 1 versteht es sich, dass der rohrförmige Abschnitt 12 nach dem Schritt des Verformens unterschiedliche Querschnittskonturen aufweisen kann. So ist es gemäß unterschiedlicher bevorzugter Ausführungsformen vorgesehen, dass verformte Flächenelement, also den rohrförmigen Abschnitt 12, mit einem runden oder 6- oder 8-eckigen regelmäßigen Querschnitt bereitzustellen.

In einem abschließenden bevorzugten Schritt S4 werden die Federarme 20 radial einwärts in den Durchgangskanal 14 verformt. Dieses Verformen umfasst vorzugsweise den Schritt des Biegens bei einem Flächenelement aus Metall. In gleicher Weise ist es denkbar, mithilfe von Wärme die Federarme 20 in die passende Konfiguration zu bringen, gerade wenn das Flächenelement aus Kunststoff besteht.

### 6. Bezugszeichenliste

- 1: Federarmhülse
- 2: Eintrittsende der Federarmhülse
- 3: Austrittsende der Federarmhülse
- 5: Mundstück, Fügekanal
- 7: Elementzufuhr
- 9: Radialkragen
- 10: umlaufende Wand
- 12: rohrförmiger Abschnitt
- 14: Durchgangskanal
- 16: Seitenfläche, Polygonfläche
- 20: Federarm
- 22: U-förmiger Durchbruch
- 24: Verbindung zur Wand 10
- 30: Stufenkontur
- 32: Freilassung
- 34: streifenartiger Endbereich
- F: Fügevorrichtung
- SK: Setzkopf
- R_{F}: Fügerichtung
- FE: Fügeelement
- L₁: erste Länge, erste Etage

## Patentansprüche

1. Federarmhülse (1), mit der ein Fügeelement (FE) einer Fügevorrichtung (F) positionierbar ist und die die folgenden Merkmale aufweist:
a. einen rohrförmigen Abschnitt (12), der durch eine umlaufende Wand (10) gebildet wird,
b. die umlaufende Wand (10) weist in Umfangsrichtung eine Mehrzahl zueinander regelmäßig beabstandeter U-förmiger Durchbrüche (22) auf,
c. die eine Mehrzahl einseitig befestigter Federarme (20) bilden, die radial einwärts in den rohrförmigen Abschnitt (12) geneigt sind, in der
d. in einer ersten Längsrichtung des rohrförmigen Abschnitts (12) an einer ersten Länge (L₁) und danach an mindestens einer zweiten Länge (L₂) jeweils mindestens drei Federarme (20) in Umfangsrichtung gleichmäßig voneinander beabstandet angeordnet sind, und die Federarmhülse (1) ist **dadurch gekennzeichnet, dass**
e. die einseitig befestigten Federarme (20) sich ausgehend von einem festen Ende (24) in die erste Längsrichtung erstrecken und die mindestens drei Federarme (20) der zweiten Länge (L₂) an Umfangspositionen angeordnet sind, die zwischen den mindestens drei Federarmen (20) der ersten Länge (L₁) liegen.

2. Federarmhülse (1) gemäß Patentanspruch 1, in der der rohrförmige Abschnitt (12) einen runden oder einen polygonalen Querschnitt aufweist.

3. Federarmhülse (1) gemäß Patentanspruch 1 oder 2, in der der rohrförmige Abschnitt (12) einen Querschnitt eines regelmäßigen mindestens 6-eckigen geradzahligen Polygons umfasst, in dem an der ersten Länge (L₁) die Federarme (20) an geradzahligen Polygonflächen und an der zweiten Länge (L₂) an ungeradzahligen Polygonflächen angeordnet sind.

4. Federarmhülse (1) gemäß Patentanspruch 1 oder 2, in der die erste Länge (L₁) und die zweite Länge (L₂) sowie die Länge der Federarme (20) derart gewählt sind, dass die Federarme (20) der ersten Länge (L₁) und die Federarme (20) der zweiten Länge (L₂) in Längsrichtung des rohrförmigen Abschnitts (12) einander überlappen.

5. Federarmhülse (1) gemäß einem der vorhergehenden Patentansprüche, die sich aus mindestens zwei axialen Hülsenabschnitten zusammensetzt, die axial angrenzend aneinander angeordnet sind, und/oder die an einem oder an beiden axialen Enden regelmäßig angeordnete Freilassungen (32) benachbart zu streifenartigen Endbereichen (34) aufweist.

6. Federarmhülse (1) gemäß Patentanspruch 5, zweite Alternative, die sich aus mindestens zwei Hülsenabschnitten zusammensetzt, deren axiale Enden mit den regelmäßig angeordneten Freilassungen (32) und den benachbarten streifenartigen Endbereichen (34) ineinander verschachtelt angeordnet sind.

7. Federarmhülse (1) gemäß einem der vorhergehenden Patentansprüche, in der die umlaufende Wand (10) geschlossen oder unterbrochen ausgebildet ist.

8. Fügevorrichtung (F) mit einem Mundstück, insbesondere ein Setzgerät für Stanzniete oder Bolzen, wobei innerhalb des Mundstücks eine Federarmhülse (1) gemäß einem der vorhergehenden Patentansprüche angeordnet ist.

9. Fügevorrichtung (F) gemäß Patentanspruch 8, in der das Mundstück einen Fügekanal (5) aufweist, der angrenzend an ein Ende in einer Fügerichtung einen radial einwärts ragenden Haltekragen (9) umfasst, an dem sich die Federarmhülse (1) in axialer Richtung abstützt.

10. Herstellungsverfahren für eine Federarmhülse (1) gemäß einem der Patentansprüche 1-7, das die folgenden Schritte aufweist:
a. Bereitstellen eines Flächenelements mit einer Mehrzahl zueinander regelmäßig beabstandeter U-förmiger Durchbrüche (22), die eine Mehrzahl einseitig befestigter Federarme (20) bilden, die sich ausgehend von einem festen Ende (24) in eine erste Längsrichtung erstrecken,
b. Verformen des Flächenelements in einen rohrförmigen Abschnitt (12), der einen Durchgangskanal (14) definiert und
c. Verformen der Federarme (20) radial einwärts in den Durchgangskanal (14), sodass sie geneigt angeordnet sind.

11. Herstellungsverfahren gemäß Patentanspruch 10, in dem das Flächenelement ein Federblech ist, welches lasergeschnitten oder geätzt oder gestanzt wird.

12. Herstellungsverfahren gemäß Patentanspruch 11, in welchem der rohrförmige Abschnitt (12) derart verformt wird, dass er einen 6- oder 8-eckigen regelmäßigen Querschnitt aufweist.

13. Herstellungsverfahren gemäß Patentanspruch 11 oder 12 mit dem weiteren Schritt:
Biegen der Federarme (20) radial einwärts in den Durchgangskanal (14).

14. Herstellungsverfahren gemäß Patentanspruch 10, in dem das Flächenelement ein Kunststoffelement ist, welches lasergeschnitten oder geätzt oder gestanzt ist.

15. Herstellungsverfahren gemäß einem der Patentansprüche 10-14, in dem der rohrförmige Abschnitt (12) durch eine umlaufende Wand (10) gebildet wird, die geschlossen oder unterbrochen ausgebildet ist.

## Claims

1. Spring arm sleeve (1) with which a joining element (FE) of a joining device (F) is positionable and which comprises the following features:
a. a tubular section (12) which is formed by a circumferential wall (10),
b. in the circumferential direction, the circumferential wall (10) comprises a plurality of U-shaped apertures (22) regularly spaced from one another,
c. wherein the plurality of U-shaped apertures (22) forms a plurality of spring arms (20) fastened on one side and being inclined radially to the inside into the tubular section (12), in which
d. in a first longitudinal direction of the tubular section (12), at a first length (L₁) and thereafter at least at a second length (L₂), at least three spring arms (20) each are arranged in circumferential direction evenly spaced from one another, and the spring arm sleeve (1) is **characterized in that**
e. the spring arms (20) which are fastened on one side extend starting from a fixed end (24) in the first longitudinal direction and the at least three spring arms (20) of the second length (L₂) are arranged at circumferential positions which are located between the at least three spring arms (20) of the first length (L₁).

2. Spring arm sleeve (1) according to claim 1, in which the tubular section (12) comprises a round or polygonal cross-section.

3. Spring arm sleeve (1) according to claim 1 or 2, in which the tubular section (12) comprises a cross-section of a regular at least hexagonal even polygon, in which the spring arms (20) are arranged at even polygon sides at the first length (L₁) and at odd polygon sides at the second length (L₂).

4. Spring arm sleeve (1) according to claim 1 or 2, in which the first length (L₁) and the second length (L₂) as well as the length of the spring arms (20) are selected in such a manner that the spring arms (20) of the first length (L₁) and the spring arms (20) of the second length (L₂) overlap each other in the longitudinal direction of the tubular section (12).

5. Spring arm sleeve (1) according to one of the preceding claims, which is comprised of at least two axial sleeve sections which are arranged axially adjacent to each other and/or which comprise at one or both axial ends regularly arranged clearances (32) adjacent to strip-like end portions (34).

6. Spring arm sleeve (1) according to claim 5, second alternative, which is comprised of at least two sleeve sections, the axial ends of which are arranged in a nested manner with the regularly arranged clearances (32) and the adjacent strip-like end portions (34).

7. Spring arm sleeve (1) according to one of the preceding claims, in which the circumferential wall (10) has a closed or discontinuous configuration.

8. Joining device (F) with a mouthpiece, in particular a setting device for punch rivets or bolts, wherein a spring arm sleeve (1) according to one of the preceding claims is arranged inside the mouthpiece.

9. Joining device (F) according to claim 8, in which the mouthpiece comprises a joining channel (5) which, adjacent to an end in a joining direction, comprises a radially inwardly projecting retaining collar (9) against which the spring arm sleeve (1) rests in the axial direction.

10. Manufacturing method for a spring arm sleeve (1) according to one of the claims 1 to 7, comprising the following steps:
a. providing a planar element with a plurality of U-shaped apertures (22) regularly spaced from one another, forming a plurality of spring arms (20) fastened on one side and extending starting from a fixed end (24) in a first longitudinal direction,
b. deforming the planar element into a tubular section (12) which defines a passage channel (14) and
c. deforming the spring arms (20) radially into the passage channel (14) so that they are arranged in an inclined manner.

11. Manufacturing method according to claim 10, in which the planar element is a spring sheet which is laser cut or etched or punched.

12. Manufacturing method according to claim 11, in which the tubular section (12) is deformed in such a manner that it has a hexagonal or octagonal uniform cross-section.

13. Manufacturing method according to claim 11 or 12 with the further step:
bending the spring arms (20) radially to the inside into the passage channel (14).

14. Manufacturing method according to claim 10, in which the planar element is a plastic element which is laser cut or etched or punched.

15. Manufacturing method according to one of the claims 10 to 14, in which the tubular section (12) is formed by a circumferential wall (10) which has a closed or discontinuous form.

## Revendications

1. Manchon de bras à ressort (1), permettant de positionner un élément d'assemblage (FE) d'un dispositif d'assemblage (F) et présentant les caractéristiques suivantes :
a. une section tubulaire (12) formée par une paroi circonférentielle (10),
b. dans la direction périphérique, la paroi circonférentielle (10) présente une pluralité d'interruptions en forme de U (22) espacées les unes des autres de façon régulière,
c. lesquelles forment une pluralité de bras à ressort (20) fixés unilatéralement, lesquels sont inclinés radialement vers l'intérieur dans la section tubulaire (12), dans lequel
d. dans une première direction longitudinale de la section tubulaire (12), au moins trois bras à ressort (20) sont disposés respectivement sur une première longueur (L₁) et ensuite sur au moins une deuxième longueur (L₂), en étant espacés les uns des autres de façon régulière dans la direction périphérique, et le manchon de bras à ressort (1) est **caractérisé en ce que**
e. les bras à ressort (20) fixés unilatéralement s'étendent dans la direction longitudinale à partir d'une extrémité fixe (24) et les au moins trois bras à ressort (20) de la deuxième longueur (L₂) sont disposés à des positions périphériques situées entre les au moins trois bras à ressort (20) de la première longueur (L₁).

2. Manchon de bras à ressort (1) selon la revendication 1, dans lequel la section tubulaire (12) présente une section transversale circulaire ou polygonale.

3. Manchon de bras à ressort (1) selon la revendication 1 ou 2, dans lequel la section tubulaire (12) comporte une section transversale d'un polygone régulier pair au moins hexagonal, dans lequel les bras à ressort (20) sont disposés sur des surfaces de polygone paires sur la première longueur (L₁) et sur des surfaces de polygone impaires sur la deuxième longueur (L₂).

4. Manchon de bras à ressort (1) selon la revendication 1 ou 2, dans lequel la première longueur (L₁) et la deuxième longueur (L₂) ainsi que la longueur des bras à ressort (20) sont sélectionnées de telle façon que les bras à ressort (20) de la première longueur (L₁) et les bras à ressort (20) de la deuxième longueur (L₂) se chevauchent entre eux dans la direction longitudinale de la section tubulaire (12).

5. Manchon de bras à ressort (1) selon l'une des revendications précédentes, lequel est constitué d'au moins deux sections de manchon axiales disposées de façon axialement adjacente l'une à l'autre, et/ou lequel présente des dégagements disposés de façon régulière (32) à une extrémité axiale ou aux deux, au voisinage de régions d'extrémité de type bande (34).

6. Manchon de bras à ressort (1) selon la revendication 5, deuxième alternative, lequel est constitué d'au moins deux sections de manchon, dont les extrémités axiales sont disposées de façon imbriquée dans les dégagements disposés de façon régulière (32) et les régions d'extrémité de type bande (34) voisines.

7. Manchon de bras à ressort (1) selon l'une des revendications précédentes, dans lequel la paroi circonférentielle (10) est réalisée de manière fermée ou discontinue.

8. Dispositif d'assemblage (F) doté d'un embout, en particulier d'un outil de pose de rivets auto-poinçonneurs ou de boulons, dans lequel un manchon de bras à ressort (1) selon l'une des revendications précédentes est disposé à l'intérieur de l'embout.

9. Dispositif d'assemblage (F) selon la revendication 8, dans lequel l'embout présente un canal d'assemblage (5) comportant un col de maintien (9) faisant saillie radialement vers l'intérieur de façon adjacente à une extrémité dans une direction d'assemblage, sur lequel le manchon de bras à ressort (1) s'appuie dans la direction axiale.

10. Procédé de fabrication d'un manchon de bras à ressort (1) selon l'une des revendications 1-7, lequel présente les étapes suivantes :
a. mise à disposition d'un élément plat doté d'une pluralité d'interruptions en forme de U (22) espacées de façon régulière, lesquelles forment une pluralité de bras à ressort (20) fixés unilatéralement, lesquels s'étendent dans une première direction longitudinale à partir d'une extrémité fixe (24),
b. déformation de l'élément plat en une section tubulaire (12) définissant un canal de passage (14) et
c. déformation des bras à ressort (20) radialement vers l'intérieur dans le canal de passage (14), de telle façon que ceux-ci sont disposés de façon inclinée.

11. Procédé de fabrication selon la revendication 10, dans lequel l'élément plat est une tôle à ressort, laquelle est découpée au laser ou gravée ou estampée.

12. Procédé de fabrication selon la revendication 11, dans lequel la section tubulaire (12) est déformée de manière à présenter une section transversale régulière hexagonale ou octogonale.

13. Procédé de fabrication selon la revendication 11 ou 12, comprenant l'étape supplémentaire suivante :
flexion des bras à ressort (20) radialement vers l'intérieur dans le canal de passage (14).

14. Procédé de fabrication selon la revendication 10, dans lequel l'élément plat est un élément en plastique, lequel est découpé au laser ou gravé ou estampé.

15. Procédé de fabrication selon l'une des revendications 10-14, dans lequel la section tubulaire (12) est formée par une paroi circonférentielle (10), laquelle est réalisée de manière fermée ou discontinue.
